# DEMANDE DE BREVET EUROPEEN

(11) **EP 1 074 303 A1**
(43) Date de publication de la demande: **07.02.2001**
(21) Numéro de dépôt: 00402102.8
(22) Date de dépôt: 21.07.2000
(51) Int. Cl.: B02C 17/00, C05F 17/02

(54) **Tambour destiné à un appareil de traitement de déchets et appareil correspondant**

(30) Priorité: 28.07.1999 FR 9909814
(71) Demandeur: SGE Environnement, 92851 Rueil Malmaison Cedex (FR)
(72) Inventeur: Levasseur, Jean-Pierre, 75116 Paris (FR); Combaneyre, Bernard, 75116 Paris (FR)
(74) Mandataire: Ballot, Paul

(57) **Abrégé**

La présente invention se rapporte à un tambour (2) destiné à un appareil (1) de traitement de déchets, et à un tel appareil.

Le tambour (2) comporte une enveloppe rotative (2c) allongée comprenant une partie externe (2a) et une partie interne (2b), cette dernière comprenant des grands couteaux (16), des petits couteaux (18) et des pointes (17). Le tambour comprend en outre une paroi transversale fixe (4) d'arrivée des déchets à traiter, comprenant deux ouvertures (6,7), et une paroi transversale (5) de sortie des déchets tournant simultanément avec l'enveloppe rotative (2c). Cette paroi (5) comprend également deux ouvertures (12, 13).

L'appareil de traitement comprenant le tambour (2), comprend de plus différents moyens d'acheminement des déchets à traiter, d'évacuation des déchets traités, un moyen de ventilation de façon à faire circuler de l'air extérieur au travers de l'enceinte du tambour (2), cesdits moyens étant connus de l'homme du métier.

## Description

La présente invention se rapporte à un tambour destiné à un appareil de prétraitement et de conditionnement de déchets ménagers, de déchets commerciaux ou de déchets industriels banaux (DIB), et à un tel appareil.

Il est déjà connu du document FR 2 395 783 d'utiliser un dispositif pour extraire des matières cellulosiques mélangées à d'autres matériaux tels que des matières plastiques, des métaux légers, des déchets de bois. Ce dispositif est constitué d'un tambour comprenant un rotor, ce dernier tournant rapidement et dans un sens inversé à celui du tambour. Il comprend des doigts coupeurs répartis de façon hélicoïdale sur une première partie du rotor, et des dents de déchiquetage sur une seconde partie de ce rotor.

Un tel dispositif présente l'inconvénient majeur de ne traiter que des matières cellulosiques. En effet, il ne permet pas d'obtenir un mélange homogène d'un ensemble de déchets constitués de composants de nature diverse et dont une partie pourrait être transformée en compost.

On connaît encore du document FR 2 566 678 une installation de traitement de déchets, par exemple d'origine ménagère. Cette installation comprend un déchiqueteur, un dispositif de séchage et de triage, et un moyen de ventilation d'air qui fait traverser de l'air chaud dans le cylindre.

Ce dispositif présente l'inconvénient de nécessiter une source d'air chaud qui entraîne un surcoût des dépenses énergétiques et par conséquent d'avoir une installation de traitement complexe.

Le document FR 2 676 186 décrit un procédé de traitement des ordures, telles que des ordures ménagères, par la séparation des composants les plus meubles des plus durs. Il se rapporte également à un dispositif de traitement.

Selon ce procédé, les composants les plus meubles sont déchiquetés par projection d'eau envoyée sous haute pression, alors que les composants les plus durs, quasiment non découpés, sont extraits du tambour sous leur état initial. Les composants déchiquetés sont emportés avec l'eau en dehors du tambour.

L'installation décrite dans ce document comprend un tambour de traitement entraîné en rotation autour d'un axe quasiment horizontal, et ayant une ouverture d'arrivée des ordures à traiter et une ouverture d'extraction des ordures les plus dures. La paroi du tambour est pourvue de perforations sur toute sa surface pour permettre l'élimination des composants les plus meubles qui sont entraînés par l'eau.

Malheureusement la présence de telle quantité d'eau projetée sous une pression élevée ne permet pas de réaliser une séparation correcte et non pulvérulente de chaque groupe de constituants pris à l'état sec ou simplement légèrement humidifié.

Le document FR 2 464 097 décrit quant à lui, une installation de désagrégation par broyage et déchiquetage de déchets, par exemple d'origine domestique. Cette installation comprend un tambour cylindrique pouvant tourner autour d'un axe horizontal sous l'action de moyens d'entraînement. Le tambour, dont l'intérieur est divisé par des cloisons, comprend en outre des barres de déchiquetage qui pénètrent dans le tambour sous l'action de moyens d'introduction prévus à une extrémité du tambour.

Les barres et les cloisons présents dans le tambour forment une structure grillagée. Une telle structure coopère efficacement avec les éléments de broyage pour broyer et déchiqueter les déchets à traiter. Les bords des cloisons et des barres sont tranchants.

Mais une telle installation ne permet pas une séparation délicate des différents constituants des déchets ménagers. En effet, on obtient un mélange de type pulvérulent de l'ensemble des constituants.

Enfin, le document FR 2 746 410 divulgue un tambour destiné à un appareil pour la fermentation accélérée en aérobie de déchets organiques. Le tambour comprend une enveloppe rotative cylindrique, une paroi transversale terminale de sortie située à l'extrémité de décharge des déchets traités. La paroi comprend une ouverture 18 décentrée par rapport à l'axe horizontal de rotation. Cette paroi peut soit pivoter en synchronisme avec l'enveloppe rotative, soit rester fixe relativement à elle. L'ouverture 18 permet à la fois le déchargement des déchets traités lorsqu'elle se trouve en position basse, ainsi que la ventilation continue du tambour lorsqu'elle est en position haute. La paroi terminale comprend en outre, et dans le prolongement de l'enveloppe rotative, une paroi latérale cylindrique percée d'ouvertures. Ces ouvertures permettent le passage des déchets traités.

Malheureusement un tel tambour ne permet pas la ventilation permanente des déchets lorsque l'ouverture 18 se trouve en position de déchargement, c'est-à-dire en position basse.

Aussi il subsiste le besoin d'un tambour destiné à un appareil de prétraitement et de conditionnement de déchets essentiellement d'origine ménagère, qui permet de prétraiter les déchets ménagers par la séparation en continu des composants fermentescibles des autres composants qui présentent une haute valeur ajoutée, tels que les matières plastiques, les textiles, les papiers/cartons, des fractions métalliques ou encore des inertes tels que le verre, les cailloux, et ceci sans transformer ces autres composants en un mélange pulvérulent. Il existe également le besoin d'un tambour destiné à un tel appareil permettant la ventilation permanente du tambour même lorsqu'il se trouve en position de déchargement des déchets traités.

L'invention a donc pour objet un tambour destiné à un appareil de prétraitement et de conditionnement de déchets ménagers, de déchets commerciaux ou de déchets industriels banaux comportant :
- une enveloppe rotative (2c) allongée comprenant une partie externe (2a) et une partie interne (2b),
- une paroi transversale (4) fixe d'arrivée des déchets à traiter située à l'entrée du tambour et immobile par rapport à l'enveloppe rotative (2c), ladite paroi comprenant une première ouverture (7) reliée à un ventilateur (10) et, une seconde ouverture (6) reliée à un dispositif de chargement des déchets,
- une paroi transversale de sortie (5) des déchets traités située à la sortie du tambour tournant simultanément avec l'enveloppe rotative,
caractérisé en ce que l'enveloppe rotative comprend des grands couteaux (16) des petits couteaux (18) et des pointes (17) fixés de façon démontable, et en ce que la paroi transversale de sortie (5) comprend deux ouvertures (12, 13) dont une se situe dans la moitié supérieure de la paroi (5), et l'autre dans la moitié inférieure de la paroi (5).

L'utilisation d'un tambour tel que défini selon l'invention présente l'avantage d'obtenir un mélange homogène et non pulvérulent des déchets, grâce à un triage préalable correct, et à un conditionnement facile de chaque type de constituants des déchets ménagers. Un tri préalable des déchets réalisé en utilisant un tambour selon l'invention permet un traitement ultérieur plus facile des différents types de constituants.

Le tambour présente encore comme avantage de pouvoir tourner de manière continue 24 heures sur 24 heures de façon active en période de chargement/déchargement, et de façon ralentie en période inactive de non chargement/non déchargement. Le tambour présente encore l'intérêt de permettre simultanément la macération des déchets lorsqu'il est en position active ou inactive du fait de sa rotation, et la ventilation du tambour pour renouveler constamment l'air vicié à l'aide d'une ouverture réglable.

Le tambour peut avoir une vitesse de rotation différente selon qu'il est en fonctionnement actif ou ralenti. La vitesse de rotation peut par ailleurs varier en fonction de la nature des déchets à traiter.

L'enveloppe rotative du tambour selon l'invention peut être, au choix, de forme sensiblement circulaire ou hexagonale. Une section de forme hexagonale de cette enveloppe peut permettre d'améliorer la qualité et la vitesse du déchiquetage grâce à la présence des angles de l'hexagone.

Les enveloppes rotatives comprennent des couteaux et des pointes en nombre et en emplacements identiques, qu'elles soient de section sensiblement circulaire ou hexagonale.

Le tambour peut avoir une longueur maximale allant de 60 à 65 mètres et de préférence entre environ 20 et 25 mètres. La longueur totale du tambour est définie en fonction de la nature des déchets à traiter.

Le tambour peut avoir un diamètre allant de 3 à 5 mètres.

L'enveloppe rotative comprend tout d'abord des couteaux de grande taille disposés sur une longueur allant de 0 à 5 mètres à partir de la paroi transversale d'arrivée des déchets. Cette portion du tambour ne comprend ni pointes ni petits couteaux. Les petits couteaux, lorsqu'ils sont présents dans le tambour sont régulièrement répartis avec les pointes sur la même portion de surface interne de l'enveloppe qui fait suite à celle comportant les grands couteaux. Les petits couteaux ne sont pas obligatoirement présents dans le tambour.

La position et la densité des petits et grands couteaux par unité de surface sur l'enveloppe font partie des paramètres de réglage de l'appareil de l'invention au même titre que le taux d'humidité des déchets à traiter ainsi que la vitesse de rotation du tambour.

Les pointes ont un rôle de déchiquetage et de dilacération des déchets pendant la rotation du tambour, alors que les petits couteaux ont un rôle de « râpe ».

Les grands couteaux ont plus pour rôle de faciliter l'introduction et l'avancement des déchets à l'entrée du tambour et de déchiqueter les déchets.

Les petits couteaux, présents en plus grand nombre par rapport aux grands couteaux, ont pour objectif principal de jouer le rôle de « râpe » lors de la rotation du tambour. Leur utilisation permet d'obtenir un niveau de dilacération plus élevé des déchets déjà en partie traités par les grands couteaux. C'est par exemple le cas des déchets à base de papier/carton où le tambour permet de les dilacérer au maximum de façon à pouvoir les récupérer avec la fraction fermentescible à la sortie du tambour en vue d'un traitement ultérieur de compostage ou de méthanisation.

Les grands couteaux peuvent se présenter sensiblement sous la forme d'une cornière où les deux lames ont de préférence la forme en « V » ou en « L ».

Les grands couteaux peuvent présenter une longueur allant d'environ 600 à 900 mm, une largeur allant d'environ 100 à 250 mm, et une hauteur allant d'environ 350 à 500 mm.

Les petits couteaux, ayant de préférence sensiblement une forme de pyramide aplatie, peuvent présenter une longueur allant d'environ 500 à 600 mm, une largeur allant de d'environ 100 à 250 mm, et une hauteur allant d'environ 150 à 250 mm.

Lorsqu'ils sont appliqués sur la surface interne de l'enveloppe du tambour, les grands couteaux peuvent présenter un angle α, qui est défini avec la direction d'avancement des déchets dans le tambour, et qui peut varier de 60° à 80°. Une telle inclinaison des couteaux permet de faciliter l'acheminement des déchets dès leur entrée dans le tambour.

Les grands couteaux sont disposés en hélice dans le tambour de façon à ce que la partie tranchante soit directement en contact avec les déchets pendant la rotation du tambour. La partie tranchante du petit couteau peut être recouverte d'une pièce en métal dur, démontable, pour limiter le phénomène d'abrasion lorsque les déchets comprennent de grande quantité d'éléments abrasifs.

Les petits couteaux sont de préférence disposés en quinconce sur l'enveloppe rotative avec au maximum 2 petits couteaux par mètre carré de surface développée de tambour.

Les petits couteaux peuvent être séparés l'un de l'autre d'une distance allant de 700 à 1000 mm. Ils peuvent par ailleurs présenter un léger angle β par rapport à la direction d'avancement des déchets allant de 75° à 90°.

Les pointes présentes sur la surface de l'enveloppe rotative sont de préférence disposées sur une longueur de cette enveloppe supérieure à 5 mètres à compter de la paroi transversale d'arrivée et jusqu'à la paroi transversale de sortie des déchets.

De préférence, les pointes ont sensiblement la forme d'une pyramide composée de trois faces triangulaires, indépendantes l'une de l'autre et reliées par des moyens de fixations mécaniques classiques, tels que vis, boulons. Les pointes peuvent présenter une hauteur allant d'environ 350 à 500 mm, une base allant d'environ 150 à 250 mm et un angle χ, qui est défini entre deux côtés quelconques adjacents reliés à la base, qui peut être compris entre 60° et 70°.

Selon une autre variante, lorsque le tambour ne comprend pas de petits couteaux, les pointes peuvent être séparées les unes des autres d'une distance allant d'environ 2 à 5 mètres ; et peuvent être installées par groupe de deux à l'opposé l'une de l'autre. Les pointes sont alors disposées de façon à ce que l'une des pointes de la pyramide se trouve face aux déchets à traiter transitant dans le tambour.

Lorsque le tambour est équipé de petits couteaux, les pointes, par groupe de deux, disposées à l'opposé l'une de l'autre, sont placées entre deux petits couteaux ou à la place d'un petit couteau si l'espace entre deux petits couteaux est trop petit.

Les couteaux et les pointes peuvent être démontés facilement, par exemple lorsque les caractéristiques physico-chimiques des déchets ont changé de façon à obtenir un résultat différent en terme de déchiquetage, ou par exemple en cas d'usure de l'une des pièces.

Le tambour selon l'invention peut tourner à une vitesse allant de 0,15 à 5 tours par minute selon la nature des déchets, la qualité de séparation souhaitée en aval et la nature du fonctionnement du tambour (actif ou inactif). Il est également possible d'ajouter de l'eau de façon à avoir un pourcentage d'humidité suffisant pour déchiqueter des déchets essentiellement à base de papier/carton. L'ajout d'eau doit se faire de façon à ne surtout pas obtenir un bain dans lequel surnageraient les déchets à traiter. Le papier/carton humidifié forme un gâteau compact duquel les matières plastiques, par exemple, se détachent facilement. La séparation de chaque type de constituants à la sortie du tambour est alors beaucoup plus facile.

Le temps de séjour des déchets dans le tambour peut varier de 6 à 24 heures si les déchets comprennent, par exemple, du papier et/ou du carton qui ne sont pas valorisés de manière biologique. Par contre, dans le cas où le papier/carton doit ensuite être valorisé, alors le temps de séjour des déchets dans le tambour peut être augmenté pour atteindre jusqu'à 2 jours.

Quelles que soient la qualité et la nature des déchets ménagers, le tambour peut être rempli à un volume allant d'environ 60 à 85%.

L'invention a également pour objet un appareil de prétraitement et de conditionnement de déchets ménagers comprenant un tambour tel que défini précédemment, au moins un moyen d'entraînement en rotation du tambour, des moyens d'acheminement des déchets à traiter, des moyens de récupération et de tri des déchets traités sortant du tambour, des moyens de ventilation permanente par aspiration d'air extérieur de façon à faire circuler l'air selon un axe sensiblement horizontal dans un sens opposé à celui de circulation des déchets en cours de traitement dans le tambour.

De préférence, l'air arrivant à l'entrée du tambour a une température comprise entre -5 et +35°C. Selon une variante, l'air traverse l'intérieur du tambour à une vitesse allant de 0,2 à 0,4 m/s.

L'appareil peut comprendre des moyens de chargement de déchets qui sont constitués d'une trémie de chargement pourvue d'une trappe de fermeture asservie aux moyens de chargement de manière à ce que la trappe soit ouverte en phase de chargement et fermée en phase de non chargement.

Enfin selon une dernière variante, le ventilateur peut être associé à un dispositif de traitement et/ou de désodorisation de l'air vicié extrait du tambour.

De préférence, le ventilateur comprend un filtre d'accès facile pour sa maintenance qui permet d'éviter l'encrassement du ventilateur par l'aspiration d'air chargé de déchets volants facilement lors du chargement du tambour, tels que des feuilles en matière plastique.

Le tambour selon l'invention ainsi que l'appareil vont être explicités plus en détail à l'aide des figures qui suivent, qui comprennent des exemples de réalisation, et qui ne sont nullement limitatifs.

La figure 1 est une vue schématique en coupe selon un plan axial latéral d'un appareil conforme à l'invention.

La figure 2 représente une vue schématique en coupe du tambour selon un axe AA' conforme à l'invention.

Les figures 3A, 3B et 3C représentent chacune une vue schématique en coupe du tambour selon un axe BB' conforme à l'invention selon différentes positions.

Les figures 4A et 4B représentent une vue schématique en coupe du tambour selon un axe CC'.

La figure 5 représente une vue schématique en trois dimensions d'un grand couteau.

La figure 6 représente une vue schématique en trois dimensions d'une pointe.

La figure 7 représente une vue schématique en trois dimensions d'un petit couteau.

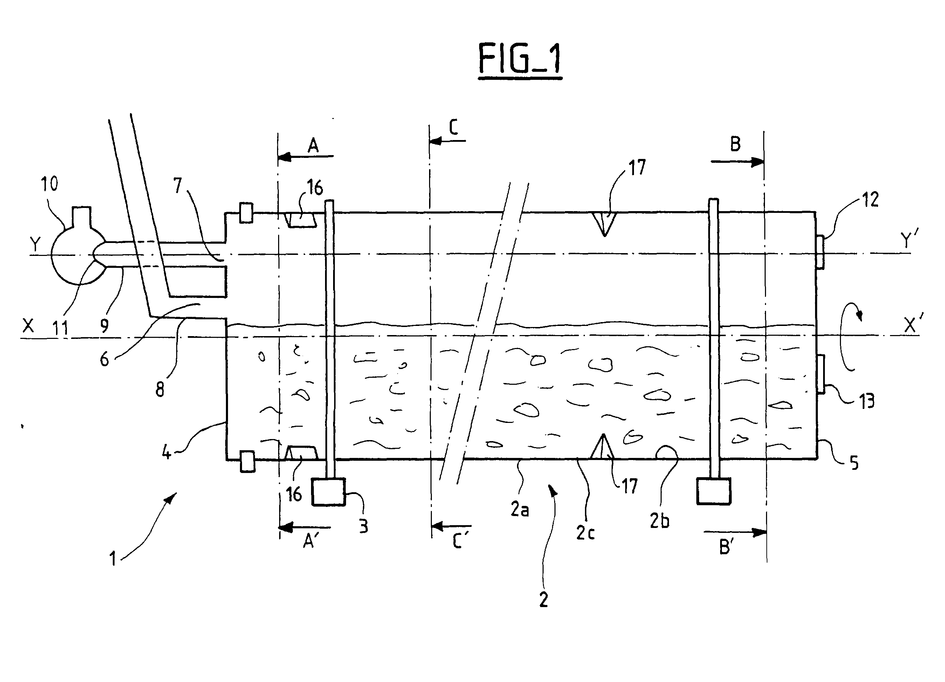

Comme on peut le voir sur la figure 1, l'appareil de prétraitement et de conditionnement de déchets est représenté par la référence générale 1.

Cet appareil comprend un tambour 2, au moins un moyen d'entraînement en rotation du tambour (non représenté), des moyens de tri des déchets sortant du tambour (non représenté), des moyens d'acheminement des déchets à traiter (non représenté).

Le tambour 2, constitué d'une enveloppe rotative 2c ayant une partie externe 2a et une partie interne 2b, est allongée et a une forme sensiblement cylindrique.

L'ensemble du tambour est constitué en acier.

Le tambour 2 tourne autour d'un axe sensiblement horizontal XX' à l'aide des moyens d'entraînement en rotation. Le tambour 2 est maintenu sensiblement horizontal à l'aide de moyens de fixation 3 espacés régulièrement sur la longueur totale du tambour. Le tambour a une longueur totale d'environ 60 mètres et un diamètre d'environ 5 mètres.

Le tambour 2 comprend une extrémité d'ouverture 4 et une extrémité terminale 5 situées respectivement à l'entrée et à la sortie du tambour.

L'extrémité 4 est constituée d'une paroi transversale pleine en acier comprenant deux ouvertures 6 et 7. Ces ouvertures 6 et 7 sont disposées dans la première moitié supérieure du tambour. L'ouverture 6 est reliée à l'aide d'une canalisation 8 à un moyen d'acheminement (non représenté) des déchets à traiter. L'ouverture 7 est reliée au moyen d'une conduite 9 à un ventilateur 10 à l'entrée duquel se trouve un filtre 11.

L'extrémité 4 du tambour est fixe par rapport à l'enveloppe rotative qui tourne autour de l'axe XX'.

L'extrémité 5 est également constituée d'une paroi transversale pleine en acier comprenant deux ouvertures 12 et 13.

Les ouvertures 12 et 13 sont respectivement situées dans la moitié supérieure et la moitié inférieure du tambour 2, les moitiés supérieure et inférieure étant définies par rapport à l'axe XX'.

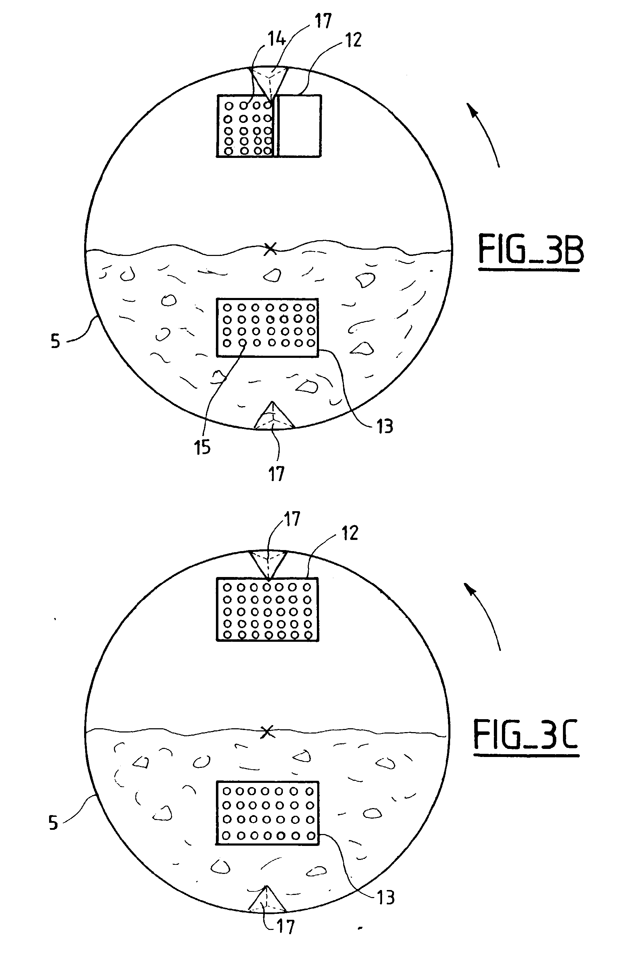

Comme on peut le voir sur les figures 3B et 3C, l'ouverture 12 est disposée dans le prolongement de l'ouverture 7. Les deux ouvertures 7 et 12 sont disposées sur le même axe YY' parallèle à l'axe XX'.

L'ouverture 12 peut être fermée à l'aide d'une grille 14 perforée d'orifices régulièrement répartis, selon les besoins d'utilisation du tambour 2.

L'ouverture 13 est constituée d'une grille 15 fixe, perforée d'orifices régulièrement répartis.

Lorsque le tambour fonctionne, il est rempli à environ 60% de son volume total en déchets ménagers.

L'enveloppe du tambour comprend sur sa partie interne 2b des grands couteaux 16 répartis de façon hélicoïdale à partir de l'extrémité d'ouverture 4 et, sur une longueur de tambour de 4 mètres à compter de la paroi transversale 4. Les grands couteaux ont la forme d'une cornière dont une des crêtes est fixée sur la paroi interne 2b et forme un angle α égal à 70° par rapport à la direction d'avancement des déchets. Les grands couteaux 12 sont présents au nombre de 7 dans cette zone.

Le reste de la surface de la partie interne 2b est recouvert de pointes 17 disposées deux par deux, à l'opposé l'une de l'autre, tous les deux mètres, jusqu'à l'extrémité 5 du tambour.

Les pointes qui ont la forme d'une pyramide, sont disposées sur la paroi interne 2b du tambour de façon à ce que l'une des pointes de cette pyramide se trouve face aux déchets acheminés par rotation du tambour 2.

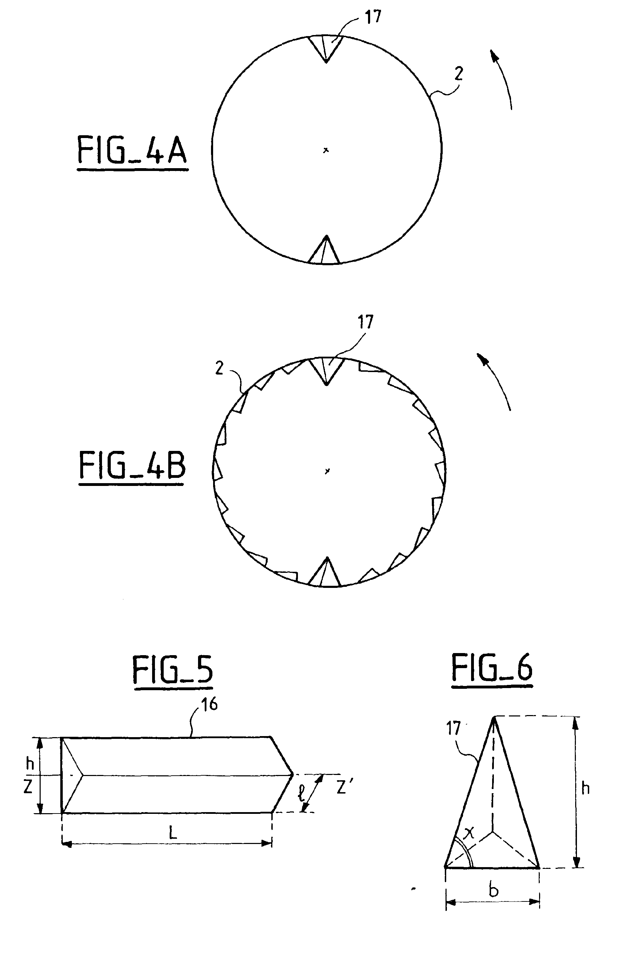

Les pointes de deux pyramides en vis-à-vis ne se touchent pas (Ceci est montré sur la figure 4A).

La figure 4B montre une variante selon laquelle la partie 2b du tambour comprend des pointes et des petits couteaux disposés régulièrement sur toute la circonférence du tambour 2.

Comme on peut le voir sur la figure 5, les grands couteaux 16 ont une longueur L de 800 mm, une largeur 1 de 200 mm mesurés entre l'axe et l'un des bords tranchants du couteau, et une hauteur h de 400 mm.

Comme on peut le voir sur la figure 6 les pointes 17 ont une longueur L de 350 mm, une base b de 200 mm et un angle χ de 60°.

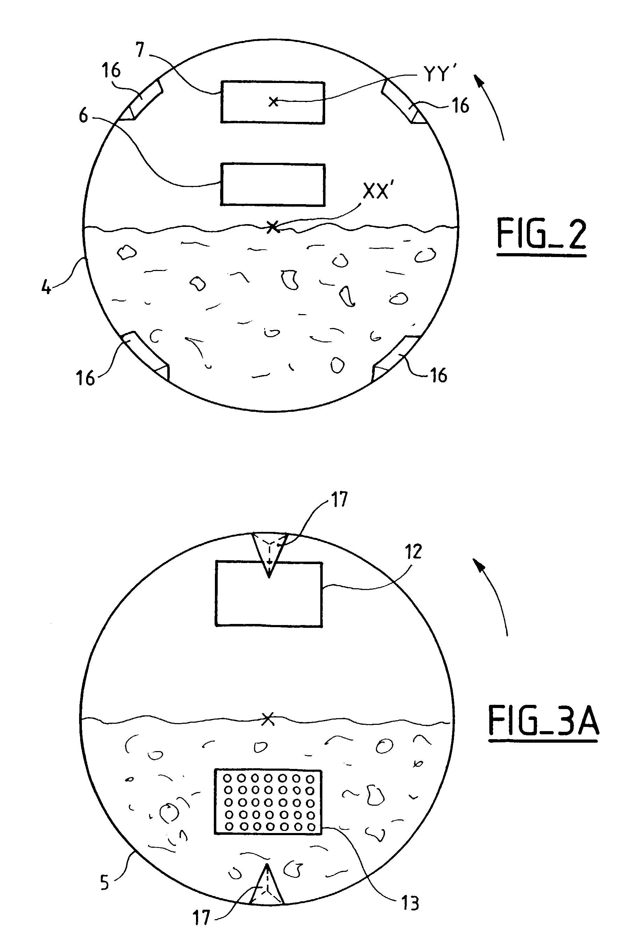

La flèche représentée sur les figures 2, 3A, 3C et 4A, 4B représente le sens de rotation du tambour.

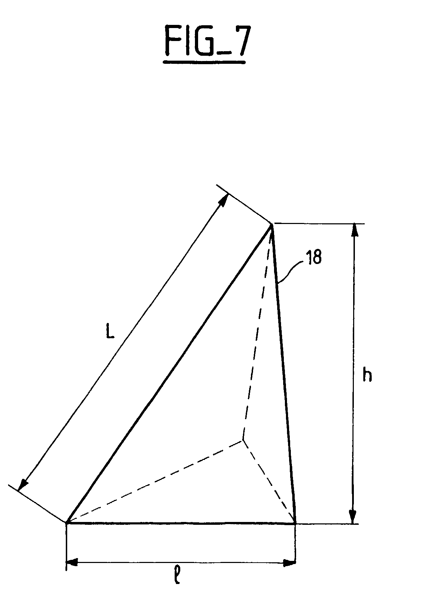

Comme on peut le voir sur la figure 7, les petits couteaux ont une longueur L de 700 mm, une largeur 1 de 200 mm, et une hauteur h de 200m.

Lorsque le tambour 2 fonctionne, les déchets ménagers à traiter sont incorporés dans le tambour par l'ouverture 6 jusqu'au remplissage d'environ 60% du volume total du tambour. Tout en se remplissant, le tambour tourne autour de l'axe XX' à une vitesse d'environ 2 tours/minute. Lors de la rotation, les grands couteaux 12 disposés à l'entrée du tambour saisissent les déchets de façon à les faire avancer progressivement dans l'enceinte interne du tambour, et à les déchiqueter.

Les déchets prétraités sont ensuite dirigés dans la partie interne 2b du tambour comprenant les pointes 17 dont le but est de dilacérer les déchets prétraités. Cet acheminement est réalisé grâce à la disposition en forme hélicoïdale des grands couteaux, ainsi qu'à la rotation du tambour.

Les déchets déchiquetés et dilacérés arrivent ainsi à l'extrémité terminale 5 du tambour 2 après un temps de séjour de 24 heures dans le tambour.

Comme on peut le voir sur les figures 3A, 3B et 3C, le tambour peut fonctionner avec une ouverture 12 ouverte ou obturée totalement par une grille 14. La figure 3B montre l'ouverture 12 en cours de fermeture.

En mode de fonctionnement actif, c'est-à-dire lors de chargement/déchargement de déchets, le tambour 2, du fait de la rotation, permet le chargement et le déchargement simultanés des déchets respectivement à chaque extrémité 4 et 5.

En effet, en mode actif, l'ouverture 12 est totalement ouverte. Du fait de la rotation du tambour 2, l'ouverture 12 située en position haute se retrouve alternativement en position basse puis haute et permet ainsi l'évacuation par cette ouverture des déchets traités.

Le tambour 2 fonctionne également avec une ventilation permanente à l'aide des ouvertures 12, 13 et du ventilateur.

Aussi lorsque l'ouverture 12 non grillagée se situe en position haute, elle permet la ventilation maximum du tambour et lorsqu'elle est en position basse, elle réalise l'évacuation des déchets traités, la ventilation étant alors réalisée par l'ouverture 13 qui passe de la position basse à la position haute.

La ventilation du tambour est maximum en mode actif du tambour 2 du fait de l'ouverture maximum de l'ouverture 12.

Elle est minimale en mode de non chargement/non déchargement(inactif), lorsque l'ouverture 12 est fermée au moyen de la grille 14. La fermeture du tambour par la grille 14 permet de poursuivre sa ventilation en mode inactif par le biais de l'ouverture grillagée 13 qui est alors en position haute, tout en évitant le déchargement des déchets retenus par la grille 14 lorsque cette dernière est en position basse.

Bien entendu, le diamètre des orifices de la grille 14 est inférieur à celui des plus petites particules de déchets traités de façon à les retenir correctement dans l'enceinte du tambour jusqu'au moment de leur évacuation.

Selon l'état de rotation du tambour, les ouvertures 12 et 13 permettent de façon alternée sa ventilation tout en réalisant simultanément le traitement des déchets par simple rotation du tambour.

## Revendications

1. Tambour destiné à un appareil de prétraitement et de conditionnement de déchets ménagers, de déchets commerciaux ou de déchets industriels banaux comportant :
- une enveloppe rotative (2c) allongée comprenant une partie externe (2a) et une partie interne (2b),
- une paroi transversale (4) fixe d'arrivée des déchets à traiter située à l'entrée du tambour et immobile par rapport à l'enveloppe rotative (2c), ladite paroi comprenant une première ouverture (7) reliée à un ventilateur (10) et, une seconde ouverture (6) reliée à un dispositif de chargement des déchets,
- une paroi transversale de sortie (5) des déchets traités situés à la sortie du tambour tournant simultanément avec l'enveloppe rotative,
caractérise en ce que l'enveloppe rotative comprend des grands couteaux (16) des petits couteaux (18) et des pointes (17) fixés de façon démontable, et en ce que la paroi transversale de sortie (5) comprend deux ouvertures (12, 13) dont une se situe dans la moitié supérieure de la paroi (5), et l'autre dans la moitié inférieure de la paroi (5).

2. Tambour selon la revendication 1, caractérisé en ce que les grands couteaux (16) sont disposés sur une longueur de l'enveloppe interne (2c) inférieure ou égale à 5 mètres à compter de la paroi transversale d'arrivée (4).

3. Tambour selon l'une des revendications 1 à 2, caractérisé en ce que les grands couteaux (16) sont disposés en hélice à l'entrée du tambour.

4. Tambour selon la revendication 1, caractérisé en ce que les petits couteaux (18) sont disposés en quinconce sur une longueur de l'enveloppe rotative supérieure ou égale à 5 mètres à compter de la paroi transversale d'arrivée (4).

5. Tambour selon l'une des revendications 1, 2 ou 3, caractérisé en ce que les grands couteaux (16), ayant sensiblement la forme d'une cornière, présentent une longueur allant de 600 à 900 mm, une largeur allant de 100 à 250 mm et une hauteur allant de 350 à 500 mm.

6. Tambour selon l'une des revendications 1 ou 4, caractérisé en ce que les petits couteaux (18), ayant sensiblement la forme d'une pyramide aplatie, présentent une longueur allant de 500 à 600 mm, une largeur allant de 150 à 250 mm et une hauteur allant de 150 à 250 mm.

7. Tambour selon la revendication 1, caractérisé en ce que les pointes (17) sont disposées sur une longueur de l'enveloppe rotative supérieure à 5 mètres à compter de la paroi transversale d'arrivée.

8. Tambour selon la revendication 1, caractérisé en ce que lorsque le tambour est équipé de petits couteaux, les pointes disposées par groupes de deux, sont placées entre deux petits couteaux ou à la place d'un petit couteau si l'espace entre deux petits couteaux est trop petit.

9. Tambour selon l'une des revendications 1, 7 ou 8, caractérisé en ce que les pointes (17) ont sensiblement la forme d'une pyramide composée de trois faces triangulaires, indépendantes l'une de l'autre est reliée par des moyens de fixations mécaniques, en ce qu'elles présentent une hauteur allant d'environ 350 à 500 mm, une base allant d'environ 150 à 250 mm et un angle χ qui est défini entre deux côtés adjacents reliés à la base allant d'environ 60° à 70°.

10. Tambour selon l'une des revendications 1, 7 à 9, caractérisé en ce que les pointes (17) sont agencées par groupes de deux, lesdits groupes étant séparés les uns des autres d'une distance allant d'environ 2 à 4 mètres.

11. Tambour selon la revendication 1, caractérisé en ce que l'enveloppe interne (2c) comprend à compter de la paroi d'arrivée (4) des grands couteaux (16) puis des pointes (17), l'ensemble étant réparti uniformément jusqu'à la sortie du tambour.

12. Appareil de prétraitement et de conditionnement de déchets ménagers comprenant un tambour (2) selon l'une quelconque des revendications précédentes, au moins un moyen d'entraînement en rotation du tambour, des moyens d'acheminement des déchets à traiter, des moyens de récupération et de tri des déchets traités sortant du tambour, des moyens de ventilation permanente comprenant un ventilateur (10) par aspiration d'air extérieur de façon à faire circuler l'air selon un axe horizontal dans un sens opposé à celui de circulation des déchets en cours de traitement dans le tambour.

13. Appareil selon la revendication 12, caractérisé en ce que l'air a une température à l'entrée du tambour comprise entre environ -5° et +35°C.

14. Appareil selon l'une des revendications 12 ou 13, caractérisé en ce que l'air traverse l'intérieur du tambour (2) à une vitesse allant de 0,2 à 0,4 m/s.

15. Appareil selon la revendication 12, caractérisé en ce que les moyens de chargement de déchets comportent une trémie de chargement pourvue d'une trappe de fermeture asservie aux moyens de chargement, de manière à ce que la trappe soit ouverte en phase de chargement et fermée en phase de non chargement.

16. Appareil selon la revendication 12, caractérisé en ce qu'au ventilateur (10) est associé un dispositif de traitement et/ou de désodorisation de l'air vicié extrait du tambour.
